(19) Europäisches Patentamt
European Patent Office
Office européen des brevets

(11) **EP 3 671 391 B1**

(12) **FASCICULE DE BREVET EUROPEEN**

(45) Date de publication et mention
de la délivrance du brevet:
**05.07.2023 Bulletin 2023/27**

(21) Numéro de dépôt: **19216243.6**

(22) Date de dépôt: **13.12.2019**

(51) Classification Internationale des Brevets (IPC):
**G05D 1/00** *(2006.01)* **G08G 5/00** *(2006.01)*
**G01C 21/34** *(2006.01)*

(52) Classification Coopérative des Brevets (CPC):
**G05D 1/0005; G08G 5/0021; G08G 5/0052;**
Y02T 90/00

(54) **OPTIMISATION D'UN MODÈLE PARAMÉTRIQUE DE PERFORMANCES D'UN AÉRONEF**

OPTIMIERUNG EINES PARAMETRISCHEN MODELLS DER LEISTUNGEN EINES LUFTFAHRZEUGS

OPTIMISATION OF A PARAMETRIC MODEL OF THE PERFORMANCE OF AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2018 FR 1873496**

(43) Date de publication de la demande:
**24.06.2020 Bulletin 2020/26**

(73) Titulaire: **Thales**
**92400 Courbevoie (FR)**

(72) Inventeurs:
• **MEULLE, Guillaume**
**31170 TOURNEFEUILLE (FR)**
• **PIERRE, Christophe**
**31470 FONTENILLES (FR)**
• **MARTINEZ, Dorian**
**31100 TOULOUSE (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2014 207 429    US-A1- 2016 019 795
US-A1- 2018 286 254    US-B1- 9 296 474**

## Description

### Domaine de l'invention

L'invention concerne le domaine de l'avionique en général. L'invention concerne en particulier des procédés et des systèmes pour optimiser tout ou partie des opérations d'un aéronef.

### Etat de la Technique

Les approches connues de l'état de la technique (e.g. WO 2017042166, ou US9290262) s'appuient généralement sur un jeu de données *modélisant* les performances dudit aéronef. Ces données de performances, bien qu'étant connues des fabricants d'aéronefs, ne sont généralement pas publiques, ce qui représente un frein considérable au développement des méthodes d'optimisation des opérations aériennes.

Il en est ainsi de la demande de brevet US 2018/286254 A1 qui a pour objectif une optimisation du coût (qui en fait est une minimisation du coût), en utilisant des données avion, des données de contexte extérieur telles que des données météo, des données du plan de vol/route avec ses contraintes, ainsi que des données d'un modèle de performance avion existant.

Par ailleurs, lorsqu'elles sont divulguées, ces données décrivent le comportement d'un type d'appareil (de manière générique) et non d'un aéronef en particulier (i.e. pas de données spécifiques). Enfin, les modèles avions peuvent ne *pas* être libres de droits.

Le cas échéant, les producteurs de systèmes d'optimisation d'opérations aériennes doivent utiliser les données de performances fournies par les fabricants d'aéronefs (le cas échéant) et se retrouvent donc dans une situation de dépendance qui leur est désavantageuse.

Dans l'état de la technique actuel, certains travaux comme « BADA » (acronyme de « Base of Aircraft Data » en anglais) ou «safety-line » par EUCASS (« European Conference for Aeronautics and Space Sciences ») présentent des limitations. Le modèle BADA est limité en termes de poussée et de traînée. Le modèle EUCASS ne s'applique qu'aux avions propulsés par turboréacteurs (pilotés en N1).

Les optimisations actuelles utilisent différentes techniques. En particulier, certaines approches privilégient des méthodes d'estimation paramétriques non linéaires (par exemple par moindres carrés). Ces techniques reposent sur des algorithmes de descente de gradient qui présentent l'inconvénient de converger, parfois, vers des minimas locaux, ce qui conduit à une mauvaise estimation des paramètres du modèle.

Les problèmes techniques en aéronautique font généralement intervenir beaucoup de paramètres différents et les méthodes paramétriques non-linéaires convergent alors peu, mal ou pas du tout. Cette absence de convergence (ou de convergence vers des minimas locaux) s'observe en effet fréquemment lorsque les processus modélisés sont de grandes dimensions (et suivent des modèles différents en fonction des points d'observation).

Les méthodes fondées sur des modèles intégrant des équations physiques de l'aéronef sont généralement dépendantes de la qualité de la modélisation et de la connaissance du comportement réel de l'aéronef. De fait, ces méthodes ne sont généralement pas robustes à la variabilité du comportement *réel* de chaque aéronef, comparé à celui d'un aéronef « moyen » (modélisé).

Il existe un besoin industriel pour des procédés et des systèmes avancés pour l'optimisation de tout ou partie des opérations d'un aéronef.

### Résumé de l'invention

Il est divulgué des procédés et des systèmes pour l'optimisation du vol d'un aéronef. La trajectoire est partitionnée en segments, chacun des segments étant régi par des jeux d'équations distincts, qui sont fonctions du mode de poussée du moteur et du guidage vertical (montée, croisière ou descente). En supposant deux modèles, aérodynamique et de régime moteur, des données issues d'enregistrements du vol sont reçues et un nombre de paramètres d'un moteur d'optimisation paramétrique est itérativement déterminé par application d'un calcul des moindres carrés jusqu'à satisfaction d'un critère de minimalité prédéfini. Le moteur d'optimisation paramétrique sert ensuite à prédire le point de trajectoire suivant un point donné. Des aspects de logiciel et de système (e.g. FMS et/ou EFB) sont décrits.

Avantageusement, le procédé selon l'invention s'appuie sur un modèle de poussée (et de traînée) plus proche de la réalité que celui mis en oeuvre dans le modèle BADA.

Avantageusement, l'invention permet de déterminer un modèle de performances d'un aéronef, et ce indépendamment de son constructeur.

Avantageusement, l'invention permet d'assurer la convergence d'une méthode d'estimation par moindres carrés sur un problème multi-modèles hybride de grande dimension.

L'invention pourra avantageusement être mise en oeuvre dans différents métiers de l'avionique, et en particulier dans les systèmes destinés à l'assistance au pilotage d'un aéronef.

En particulier, l'invention peut être déployée dans un calculateur de type FMS ou dans un ensemble de système interconnectant le FMS avec un EFB. Plus spécifiquement, les applications potentielles concernent le calcul de trajectoires, l'assistance à un avionneur pour l'établissement des performances avions, l'optimisation des opérations aériennes d'une compagnie, la simulation de vol ou encore la mise au point de systèmes avioniques au sens large.

## Description des figures

Différents aspects et avantages de l'invention vont apparaître en appui de la description d'un mode préféré d'implémentation de l'invention mais non limitatif, avec référence aux figures ci-dessous :

La [Fig.1] illustre des exemples d'étapes du procédé selon un mode de réalisation de l'invention ;

La [Fig.2] illustre un exemple d'optimisation paramétrique ;

## Description détaillée de l'invention

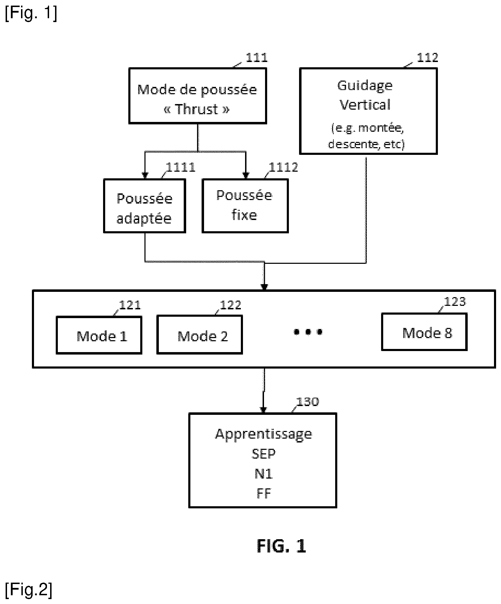

La [Fig.1] illustre l'influence du mode de poussée et du guidage vertical sur les paramètres SEP, FF et N1.

L'acronyme SEP 111 pour *Spécifie Excess Power* désigne l'énergie disponible pour la montée de l'aéronef, i.e. la capacité de monter de l'avion divisé par la masse (ce paramètre n'est pas constant)
L'acronyme FF pour *Fuel Flow* désigne la variation de la masse de carburant.

L'acronyme N1 fait référence à la vitesse de rotation du premier étage du moteur, celui qui influe le plus sur la consommation de carburant. La puissance disponible est très liée à cette vitesse N1.

Les paramètres SEP, FF et N1 sont étroitement liés.

Une façon de quantifier ou de qualifier les relations entre SEP, FF et N1 consiste à formuler des modèles (des équations) modélisant ces relations.

Les relations entre les paramètres FF, N1 et SEP sont multiples mais dépendent essentiellement du mode de pilotage de l'avion, qui se décompose en « mode de poussée » (THR pour « Thrust »111) d'une part (soit adaptée 1111 soit fixe 1111) et en « guidage vertical » 112 d'autre part (e.g montée, croisière, ou descente).

Ces modes de poussée et de guidage vertical définissent N modes de pilotage du moteur utilisés en production (ce sont les modes du pilote automatique e.g. en mode dit Open Accel, IDLE, « energy sharing », moteur au ralenti, avec ou sans sortie des aérofreins, etc). Par exemple, un mode « open accel » correspond à une poussée à fond pour atteindre et tenir des paramètres cibles prédéfinis. Ces Nt modes correspondent à autant de modèles ou de jeux d'équations.

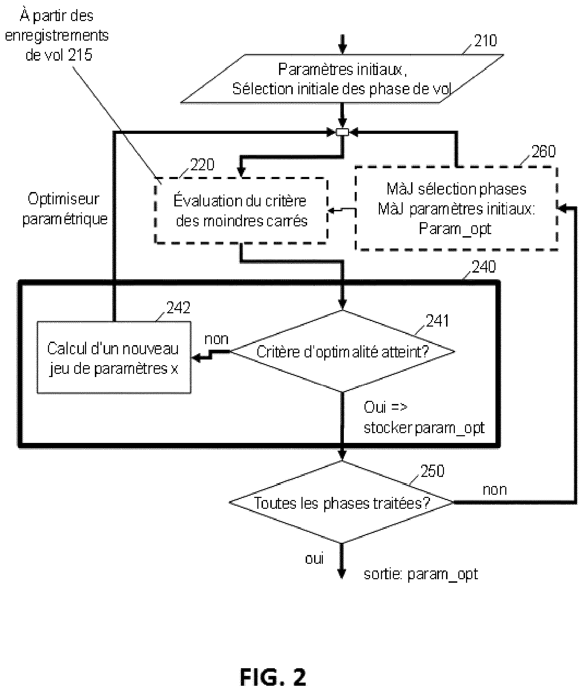

Chaque mode induit donc une manière de prédire le point de trajectoire suivant (à partir d'un mode
La [Fig.2] illustre des exemples d'étapes du procédé selon l'invention.

Dans un mode de réalisation, le procédé comprend l'étape consistant à déterminer un modèle paramétrique comprenant une pluralité de phases de vol décrivant la mécanique du vol de l'avion, et ce à partir d'enregistrements obtenus lors de vols (réels) commerciaux.

Dans un mode de réalisation, le modèle paramétrique est déterminé en utilisant la méthode des moindres carrés. La méthode des moindres carrés permet de comparer des données expérimentales, généralement entachées d'erreurs de mesure, à un modèle mathématique censé décrire ces données. Le modèle d'erreur est généralement gaussien (loi normale). Si le modèle d'erreur est non gaussien, le procédé peut recourir à la méthode du maximum de vraisemblance (dont la méthode des moindres carrés est un cas particulier).

Dans un mode de réalisation, le modèle paramétrique est déterminé en utilisant la méthode des moindres carrés récursifs (en anglais « *Recursive least squares* » acronyme RLS), qui est un filtre adaptatif (minimisant une fonction d'erreur ou les moindres carrés pondérés).

Dans un mode de réalisation, le modèle paramétrique est déterminé en utilisant la méthode des doubles moindres carrés. Cet estimateur permet notamment d'estimer un modèle de régression linéaire à variables instrumentales.

Dans un mode de réalisation, le vol de l'aéronef comprend des phases de vol distinctes, obéissant à des lois différentes selon les segments de vol le long de la trajectoire: les performances de la méthode des moindres carrés sont avantageusement améliorées s'il est tenu compte des informations de poussée et de guidage vertical.

Les phases de vol comprennent notamment les phases de décollage, montée, croisière, changement de niveau, et atterrissage.

Dans un mode de réalisation, le procédé comprend une étape consistant à déterminer une estimation par moindres carrés (ou selon des variantes) d'un modèle de performances avion, cette estimation se faisant spécifiquement en plusieurs « passages » de complexité croissante, chaque passage utilisant i) un jeu de données enrichi d'une phase de vol par rapport au passage précédent ; et ii) le résultat du passage précédent comme point d'initialisation (la première passe d'initialisation étant faite avec une phase de montée).

L'invention peut utiliser des *modèles paramétriques* prédéfinis (i.e. utilisation d'équations).

Plusieurs modèles sont possibles. Dans la description qui suit, deux modèles sont décrits (aérodynamique et moteur), qui sont nécessaires et suffisants pour déterminer un modèle de performances.

Les modèles spécifiés ci-après conjuguent avantageusement réalisme avec rapidité de calcul.

## Modèle aérodynamique

Dans un mode de réalisation, l'aérodynamique est modélisée de la façon suivante :

[Math.1]

$$C_D(C_L, M) = \sum_{i=0}^{2} \sum_{j=0}^{N} a_{i,j} C_L{}^i M^j$$

dans lequel, $a_{i,j}$ représente des coefficients ou des fonctions, $C_L$ (lift) et $C_D$ (drag) établissent le lien entre la portance, l'incidence et la trainée, et M (Mach) désigne le nombre de Mach (qui exprime le rapport de la vitesse locale d'un fluide à la vitesse du son dans ce même fluide). Ce modèle est générique.

## Modèle moteur

Dans un mode de réalisation, le régime moteur est modélisé par une fonction affine de type :

[Math.2]

$$TSP = a \times z_p + b \times M + c$$

dans lequel TSP , a, b et c représentent des coefficients, $z_p$ désigne la pression fonction de l'altitude et M désigne le nombre de Mach.

Plus généralement, dans d'autres modes de réalisation, le régime moteur est modélisé par une fonction polynomiale (à coefficients réels ou complexes).

Le motoriste peut disposer d'équations plus complètes ; la trainée et la poussée peuvent notamment être des fonctions (configuration aérodynamique).

La [Fig.2] illustre un exemple d'optimisation paramétrique selon l'invention, notamment les étapes de raffinement par ajout successif des phases de vol.

A l'étape 210 (qui est préalable, hors-ligne, d'initialisation), le procédé selon l'invention consiste à segmenter chaque vol en un nombre n_phase de phases de vol modélisables par un ensemble E d'équations prédéfinies dépendant d'un nombre p_exp de variables explicatives et d'un nombre n_par de paramètres et fournissant un vecteur d'observation de taille q_mes. 1

Les variables explicatives prennent soit des valeurs numériques continues, soit des variables discrètes décrivant les différents sous-processus suivis par le processus modélisé.

A l'étape 220, à partir d'un ensemble de fichiers (provenant par exemple d'enregistrements de vols commerciaux, c'est-à-dire de données réelles), un tableau d'observations est déterminé, lequel comprend un nombre *m_obs* de lignes et *p_exp + q_mes* colonnes et contenant les points associés à la phase de montée de l'aéronef.

A l'étape 230, le procédé selon l'invention comprend une étape consistant à déterminer (par exemple de façon arbitraire, mais pas toujours afin d'accélérer les calculs) un nombre *n_par* de paramètres initiaux et à calculer le critère des moindres carrés du tableau à l'étape 220.

Le critère des moindres carrés peut s'obtenir de la façon décrite ci-après.

Pour chaque ligne du tableau, le procédé détermine- à l'aide de l'ensemble E d'équations définies à l'étape 1 les *m_obs* composantes *(Y1...Ym_obs)* du vecteur *Y= E(X1,..Xp_exp,P1,...Pn_par).* Puis le procédé détermine la norme euclidienne N du vecteur *[Y - Yobs],* les composantes du vecteur *Yobs* étant les m_obs dernières valeurs de la ligne i du tableau. Il est enfin calculé la moyenne de N sur l'ensemble des lignes du tableau.

A l'étape suivante, le résultat ainsi obtenu est fourni à un moteur d'optimisation paramétrique 240, qui en déduira une itérée des *n_par* paramètres initiaux et répétera les étapes 230 et 240 jusqu'à satisfaction d'un critère de minimalité 241, en donnant, à la fin de ce processus, un ensemble de *n_par* paramètres, dits finaux ou optimisés.

A l'étape 250, les étapes 220, 230 et 240 sont répétées selon des variations prédéfinies.

Selon une variation, le tableau d'observations de l'étape 220 contient les points de montée et les points de descente de l'aéronef et les paramètres initiaux de l'étape 230 sont les paramètres finaux obtenus à l'étape 240.

Selon une autre variation, les étapes 220, 230 et 240 sont réitérées, dans lesquelles le tableau d'observations à l'étape 220 contient les points de montée, les points de descente et les points de croisière de l'aéronef, les paramètres initiaux de l'étape 230 étant les paramètres finaux obtenus à l'étape 240.

Dans un mode de réalisation, le tableau d'observations comprend des informations relatives au mode de poussée et au guidage vertical.

L'invention peut s'implémenter à partir d'éléments matériel et/ou logiciel. Elle peut être disponible en tant que produit programme d'ordinateur sur un support lisible par ordinateur.

Dans une variante de réalisation, une ou plusieurs étapes du procédé peuvent être mises en oeuvre au sein d'un calculateur au sol.

Avantageusement, si le calculateur se trouve à bord d'un aéronef et est connecté à un enregistreur de paramètres, les données de vol peuvent être utilisées dans une architecture temps réel pour améliorer la connaissance des performances avion en temps réel.

Dans une variante de réalisation, une ou plusieurs étapes du procédé selon l'invention sont mises en oeuvre sous forme de programme d'ordinateur hébergé sur un ordinateur portable de type « EFB » (acronyme d'« Electronic Flight Bag). Dans une variante de réalisation, une ou plusieurs étapes du procédé peuvent être mises en oeuvre au sein d'un calculateur de type « FMS » (acronyme de « Flight Management System ») ou dans une fonction FM d'un calculateur de vol.

Il est décrit un procédé pour l'optimisation du vol d'un aéronef, le vol dudit aéronef étant segmenté en un nombre *n_phase* de phases de vol modélisables par un ensemble E d'équations prédéfinies dépendant d'un nombre *p_exp* de variables explicatives et d'un nombre *n_par* de paramètres et fournissant un vecteur d'observation de taille *q_mes,* le procédé comprenant les étapes consistant à : recevoir une pluralité d'enregistrements de vols et déterminer un tableau comportant un nombre *m_obs* de lignes et *p_exp* + *q_mes* colonnes; déterminer un nombre *n_par* de paramètres et calculer le critère des moindres carrés du tableau ainsi déterminé ; déterminer *n_par* paramètres dits finaux, par itération jusqu'à satisfaction d'un critère de minimalité prédéfini dans un moteur d'optimisation paramétrique.

Les variables explicatives peuvent être des valeurs numériques continues et/ou des variables discrètes décrivant les différents sous-processus suivis par le processus modélisé.

Dans un mode de réalisation, l'étape de calcul par moindres carrés comprenant les étapes consistant à : - calculer pour chaque ligne du tableau, à l'aide de l'ensemble E d'équations définies, les m_obs composantes (Y1...Ym_obs) du vecteur Y= E(X1,...Xp_exp,P1,...Pn_par) ; - déterminer la norme euclidienne N du vecteur Y - Yobs, les composantes du vecteur Yobs étant les m_obs dernières valeurs de la ligne I du tableau et déterminer la moyenne de N sur l'ensemble des lignes du tableau.

Dans un mode de réalisation, le tableau d'observations comprenant des informations relatives au mode de poussée et au guidage vertical. Ces données (e.g. à fond, ralenti, montée, descente, etc) servent aux intégrateurs (prédiction).

Dans un mode de réalisation, l'aérodynamique est modélisée par un modèle reliant la portance, l'incidence et la trainée, et M qui désigne le nombre de Mach. Le nombre de Mach exprime le rapport de la vitesse locale d'un fluide à la vitesse du son dans ce même fluide.

Dans un mode de réalisation, le régime moteur couplé au modèle aérodynamique est modélisé par une fonction polynomiale.

Dans un mode de réalisation, les paramètres initiaux sont les paramètres finaux.

Dans un mode de réalisation, le critère des moindres carrés est un critère des moindres carrés récursifs.

Il est décrit un produit programme d'ordinateur, ledit programme d'ordinateur comprenant des instructions de code permettant d'effectuer une ou plusieurs des étapes du procédé, lorsque ledit programme est exécuté sur un ordinateur.

Il est décrit un système pour la mise en oeuvre une ou plusieurs des étapes du procédé, le système comprenant un ou plusieurs systèmes avioniques.

Dans un mode de réalisation, les calculs sont effectués au sol.

Dans un mode de réalisation, le système comprend en outre un ou plusieurs systèmes non-avioniques de type sacoche de vol électronique EFB.

Dans un mode de réalisation, le système comprend des systèmes embarqués de calcul et de stockage pour le traitement temps réel des performances de l'aéronef.

**Revendications**

1. Procédé pour déterminer un modèle de performance d'aéronef, le vol de l'aéronef étant segmenté en un nombre de phases de vol noté *n_phase,* chaque phase étant modélisable par un ensemble E d'équations prédéfinies dépendant d'un nombre de variables explicatives noté *p_exp* et d'un nombre de paramètres noté *n_par,* et fournissant un vecteur d'observation de taille *q_mes,* le procédé comprenant les étapes consistant à :

   (a) déterminer à partir de données issues d'une pluralité d'enregistrements de vols (215), le contenu d'un tableau d'observations comportant un nombre de lignes noté *m_obs* et un nombre de colonnes noté *p_exp + q_mes,* le tableau contenant des points associés à des phases de vol;
   (b) déterminer pour un nombre n_par de paramètres, un nombre de paramètres initiaux (210);
   (c) calculer à partir du nombre de paramètres initiaux, un critère des moindres carrés pour le tableau d'observations (220); et
   (d) utiliser le critère des moindres carrés obtenu dans un moteur d'optimisation paramétrique (240) et itérer les étapes (b) et (c) jusqu'à satisfaire un critère de minimalité prédéfini, ledit critère de minimalité étant satisfait pour un nombre n_par de paramètres dits paramètres finaux, lesdits paramètres finaux déterminant un modèle optimisé de performance d'aéronef.

2. Procédé selon la revendication 1, l'étape de calcul par moindres carrés comprenant les étapes consistant à :

   - calculer pour chaque ligne du tableau d'observations, à l'aide de l'ensemble E d'équations prédéfinies, les composantes (Y1 ...Ym_obs) du vecteur d'observation noté Y= E(X1,..Xp_exp,P1,...Pn_par) ;
   - déterminer la norme euclidienne N d'un vecteur noté [Y - Yobs], les composantes du vecteur Yobs étant les m_obs dernières valeurs de la ligne I du tableau d'observations; et
   - déterminer la moyenne de N sur l'ensemble des lignes du tableau.

3. Procédé selon l'une quelconque des revendications précédentes, pour lequel le tableau d'observations contient des informations relatives au mode de poussée et au guidage vertical, et le critère de minimalité.

4. Procédé selon l'une quelconque des revendications précédentes, où une aérodynamique est modélisée par un modèle de type:

$$C_D(C_L, M) = \sum_{i=0}^{2} \sum_{j=0}^{N} a_{i,j} C_L{}^i M^j$$

dans lequel $a_{i,j}$ représente un coefficient ou une fonction, $C_L$ (« lift ») et $C_D$ (« drag ») établissent le lien entre la portance, l'incidence et la trainée, et M désigne le nombre de Mach.

5. Procédé selon l'une quelconque des revendications précédentes, où le régime moteur couplé au modèle aérodynamique étant modélisé par une fonction polynomiale.

6. Procédé selon l'une quelconque des revendications précédentes, où le critère de minimalité est obtenu à l'étape (c), et où les paramètres finaux sont les paramètres initiaux.

7. Procédé selon l'une quelconque des revendications précédentes, le critère des moindres carrés étant un critère des moindres carrés récursifs.

8. Produit programme d'ordinateur, ledit programme d'ordinateur comprenant des instructions de code permettant d'effectuer les étapes du procédé selon l'une quelconque des revendications 1 à 7, lorsque ledit programme est exécuté sur un ordinateur.

9. Système pour la mise en oeuvre des étapes du procédé selon l'une quelconque des revendications 1 à 7, le système comprenant un ou plusieurs systèmes avioniques.

10. Système selon la revendication 9, le système comprenant en outre un ou plusieurs systèmes non-avioniques de type sacoche de vol électronique EFB.

**11.** Système selon la revendication 9 ou la revendication 10, comprenant des systèmes embarqués de calcul et de stockage pour le traitement temps réel des performances de l'aéronef.

**Patentansprüche**

**1.** Verfahren zum Bestimmen eines Luftfahrzeugleistungsmodells, wobei der Flug des Luftfahrzeugs in eine Anzahl von Flugphasen *n_phase* segmentiert ist, wobei jede Phase durch einen Satz E von vordefinierten Gleichungen modellierbar ist, die von einer Anzahl *p_exp* von erklärenden Variablen und einer Anzahl *n_par* von Parametern abhängen und einen Beobachtungsvektor der Größe *q_mes* liefern, wobei das Verfahren die folgenden Schritte umfasst:

(a) Bestimmen, auf der Basis von Daten, die aus einer Vielzahl von Flugaufzeichnungen (215) stammen, des Inhalts einer Beobachtungstabelle mit einer Anzahl *m_obs* von Reihen und einer Anzahl *p_exp* + *q_mes* von Spalten, wobei die Tabelle mit Flugphasen assoziierte Punkte enthält;
(b) Bestimmen, für eine Anzahl n_par von Parametern, einer Anzahl von Anfangsparametern (210);
(c) Berechnen, auf der Basis der Anzahl von Anfangsparametern, eines Kleinste-Quadrate-Kriteriums für die Beobachtungstabelle (220); und
(d) Nutzen des erhaltenen Kleinste-Quadrate-Kriteriums in einer Parameteroptimierungsmaschine (240) und Wiederholen der Schritte (b) und (c), bis ein vordefiniertes Minimalitätskriterium erfüllt ist, wobei das Minimalitätskriterium für eine Anzahl n_par von Endparameter genannten Parametern erfüllt ist, wobei die Endparameter ein optimiertes Luftfahrzeugleistungsmodell bestimmen.

**2.** Verfahren nach Anspruch 1, wobei der Kleinste-Quadrate-Berechnungsschritt die folgenden Schritte umfasst:

- Berechnen der Komponenten (Y1...Ym_obs) des Beobachtungsvektors Y= E(X1,...Xp_exp,P1,...Pn_par) für jede Reihe der Beobachtungstabelle mit Hilfe des Satzes E von vordefinierten Gleichungen;
- Bestimmen der euklidischen Norm N eines Vektors [Y - Yobs], wobei die Komponenten des Vektors Yobs die m_obs letzten Werte in Reihe I der Beobachtungstabelle sind; und
- Bestimmen des Mittelwerts von N über alle Zeilen der Tabelle.

**3.** Verfahren nach einem der vorhergehenden Ansprüche, wofür die Beobachtungstabelle Informationen bezüglich des Schubbetriebs und der vertikalen Führung sowie das Minimalitätskriterium enthält.

**4.** Verfahren nach einem der vorhergehenden Ansprüche, wobei eine Aerodynamik durch ein Modell des Typs:

$$C_D(C_L, M) = \sum_{i=0}^{2} \sum_{j=0}^{N} a_{i,j} C_L{}^i M^j$$

modelliert wird,
wobei $a_{i,j}$ einen Koeffizienten oder eine Funktion darstellt, $C_L$ ("Lift") und $C_D$ ("Drag") den Zusammenhang zwischen Auftrieb, Anstellwinkel und Widerstand herstellen und M die Machzahl bezeichnet.

**5.** Verfahren nach einem der vorhergehenden Ansprüche, wobei die an das aerodynamische Modell gekoppelte Motordrehzahl durch eine Polynomfunktion modelliert wird.

**6.** Verfahren nach einem der vorhergehenden Ansprüche, wobei das Minimalitätskriterium in Schritt (c) erreicht wird und die Endparameter die Anfangsparameter sind.

**7.** Verfahren nach einem der vorhergehenden Ansprüche, wobei das Kleinste-Quadrate-Kriterium ein rekursives Kleinste-Quadrate-Kriterium ist.

**8.** Computerprogrammprodukt, wobei das Computerprogramm Code-Befehle umfasst, die bei Ausführung des Programms auf einem Computer die Durchführung der Schritte des Verfahrens nach einem der Ansprüche 1 bis 7 zulassen.

9. System zur Durchführung der Schritte des Verfahrens nach einem der Ansprüche 1 bis 7, wobei das System ein oder mehrere Avioniksysteme umfasst.

10. System nach Anspruch 9, wobei das System ferner ein oder mehrere nichtavionische Systeme des elektronischen Flugtaschentyps (EFB) umfasst.

11. System nach Anspruch 9 oder Anspruch 10, das bordeigene Rechen- und Speichersysteme für die Echtzeitverarbeitung der Leistung des Flugzeugs umfasst.

**Claims**

1. A method for determining a performance model of an aircraft, the flight of the aircraft being segmented into a number *n_phase* of flight phases, wherein each phase can be modelled by a set E of predefined equations dependent on a number *p_exp* of explanatory variables and on a number *n_par* of parameters, and which provide an observation vector of size *q_mes,* the method comprising the steps of:

   (a) determining, from data derived from a plurality of flight recordings (215), the content of an observation table having a number *m_obs* of rows and a number *p_exp* + *q_mes* of columns; the table containing points associated with flight phases;
   (b) determining, for a number n_par of parameters, a number of initial parameters (210);
   (c) calculating, from the number of initial parameters, a least-squares criterion for the observation table (220); and
   (d) using the least-squares criterion obtained in a parametric optimisation engine (240) and iterating steps (b) and (c) until a predefined minimality criterion is satisfied, said minimality criterion being satisfied for a number n_par of parameters, referred to as end parameters, said end parameters determining an optimised aircraft performance model.

2. The method according to claim 1, the least-squares-calculation step comprising the steps of:

   - calculating, for each row of the observation table, using the set E of predefined equations, the components (Y1...Ym_obs) of the observation vector Y=E(X 1,..Xp_exp,P 1,... Pn_par);
   - determining the Euclidean norm N of a vector [Y-Yobs], the components of the vector Yobs being the m_obs last values in row I of the observation table; and
   - determining the mean for N over all of the rows of the table.

3. The method according to any one of the preceding claims, for which the observation table contains information relating to thrust mode and to vertical guidance and the minimality criterion.

4. The method according to any one of the preceding claims, the aerodynamics being modelled using a model of type:

$$C_D(C_L, M) = \sum_{i=0}^{2} \sum_{j=0}^{N} a_{i,j} C_L{}^i M^j$$

wherein $a_{i,j}$ represents a coefficient or a function, $C_L$ ("lift") and $C_D$ ("drag") establish the link between lift, angle of attack and drag, and M denotes the Mach number.

5. The method according to any one of the preceding claims, the engine speed coupled with the aerodynamic model being modelled by a polynomial function.

6. The method according to any one of the preceding claims, where the minimality criterion is obtained in step (c), and where the end parameters are the initial parameters.

7. The method according to any one of the preceding claims, the least-squares criterion being a recursive-least-squares criterion.

8. A computer program product, said computer program comprising code instructions for performing the steps of the method according to any one of claims 1 to 7 when said program is executed on a computer.

9. The system for implementing the steps of the method according to any one of claims 1 to 7, the system comprising one or more avionic systems.

10. The system according to claim 9, the system further comprising one or more non-avionic systems of electronic flight bag (EFB) type.

11. The system according to claim 9 or claim 10, comprising onboard computing and storage systems for real-time processing of the aircraft performance.

EP 3 671 391 B1

[Fig. 1]

FIG. 1

[Fig.2]

10

À partir des
enregistrements
de vol 215

210

Paramètres initiaux,
Sélection initiale des phase de vol

260

MàJ sélection phases
MàJ paramètres initiaux:
Param_opt

Optimiseur
paramétrique

220

Évaluation du critère
des moindres carrés

240

242

Calcul d'un nouveau
jeu de paramètres x

non

241

Critère d'optimalité atteint?

Oui =>
stocker param_opt

250

Toutes les phases traitées?

non

oui

sortie: param_opt

# FIG. 2

## RÉFÉRENCES CITÉES DANS LA DESCRIPTION

**Documents brevets cités dans la description**

- WO 2017042166 A
- US 9290262 B
- US 2018286254 A1

**Littérature non-brevet citée dans la description**

- BADA » (acronyme de « Base of Aircraft Data » en anglais) ou «safety-line ». *EUCASS (« European Conference for Aeronautics and Space Sciences »)*